# EUROPÄISCHE PATENTSCHRIFT

(11) **EP 2 699 401 B1**
(45) Veröffentlichungstag und Bekanntmachung des Hinweises auf die Patenterteilung: **09.09.2020**
(21) Anmeldenummer: 12708829.2
(22) Anmeldetag: 09.03.2012
(51) Int. Cl.: B28D 1/14, B23B 51/02, B23K 9/04, B23K 31/02

(54) **BOHRWERKZEUG BZW. VERFAHREN ZUR HERSTELLUNG EINES BOHRWERKZEUGS**
DRILLING TOOL AND METHOD FOR PRODUCING A DRILLING TOOL
OUTIL DE PERÇAGE ET PROCÉDÉ DE FABRICATION D'UN OUTIL DE PERÇAGE

(30) Priorität: 19.04.2011 DE 102011007694
(43) Veröffentlichungstag der Anmeldung: 26.02.2014
(73) Patentinhaber: Robert Bosch GmbH, 70442 Stuttgart (DE)
(72) Erfinder: FUESSL, Hans-Peter, 88212 Ravensburg (DE); WIDMANN, Rainer, 88285 Bodnegg (DE); VOLZ, Alexander, 88255 Baienfurt (DE)
(86) Internationale Anmeldenummer: PCT/EP2012/054131
(87) Internationale Veröffentlichungsnummer: WO 2012/143174

(56) Entgegenhaltungen:
- EP-A1- 0 251 220
- EP-A1- 0 322 554
- DE-T2- 60 018 098
- US-A- 4 864 094
- US-A- 5 947 215
- US-A1- 2010 175 926

## Beschreibung

Die Erfindung betrifft ein Bohrwerkzeug sowie ein Verfahren zur Herstellung eines Bohrwerkzeugs.

### Stand der Technik

Aus der DE 100 24 433 A1 ist ein Bohrwerkzeug zur Einwirkung auf ein zu bearbeitendes Material bekannt, welches einen Arbeitskopf umfasst, wobei der Arbeitskopf einen Grundkörper aus einem ersten Werkstoff, ein als Hauptschneidelement ausgebildete Schneidelement aus einem zweiten Werkstoff und wenigstens ein als Nebenschneidelement ausgebildetes Schneidelement aus einem dritten Werkstoff umfasst und wobei der zweite und der dritte Werkstoff jeweils härter ist als der erste Werkstoff. Bedingt durch die während des Bohrens insbesondere zur Übertragung der zwischen dem jeweiligen Schneidelement und dem Grundkörper auftretenden Scherkräfte ist eine tiefe Einbettung des jeweiligen Schneidelements und damit ein großes Schneidelementvolumen erforderlich. EP 0 322 554 A1 offenbart ein Bohrwerkzeug nach dem Oberbegriff des Anspruchs 1.

### Aufgabe

Es ist Aufgabe der Erfindung ein Bohrwerkzeug bzw. ein Verfahren zur Herstellung eines Bohrwerkzeugs vorzuschlagen, bei welchem für das jeweilige Schneidelement, insbesondere das jeweilige Nebenschneidelement ein möglichst geringes Materialvolumen erforderlich ist und bei welchem das jeweilige Schneidelement, insbesondere das jeweilige Nebenschneidelement eine besonders hochwertige und zuverlässige Verbindung mit der Grundgeometrie des Arbeitskopfes aufweist.

### Offenbarung der Erfindung

Diese Aufgabe wird ausgehend von den Merkmalen des Oberbegriffs des Anspruchs 1 bzw. des Oberbegriffs des Anspruchs 11 durch die kennzeichnenden Merkmale des Anspruchs 1 bzw. 11 gelöst. In den Unteransprüchen sind vorteilhafte und zweckmäßige Weiterbildungen angegeben.

Erfindungsgemäß ist das wenigstens eine Nebenschneidelement als aufgesetztes Schneidelement ausgebildet und aus wenigstens zwei Schweißtropfen zusammengesetzt, wobei dieses aufgesetzte Schneidelement unter Vermeidung eines zur Scherkraftübertragung geeigneten Formschlusses mit dem Grundkörper in einzelnen Schweißpunkten auf einen Oberflächenabschnitt des Grundkörpers des Arbeitskopfes aufgeschweißt ist. Kern der Erfindung ist somit ein aufgesetztes Schneidelement, welches mit dem Grundkörper durch eine Vielzahl von Schweißvorgängen so gut verbunden ist, dass zwischen dem Grundkörper und dem aufgesetzten Schneidelement auf einen Formschluss zur Scherkraftübertragung verzichtet werden kann. Durch das Aufschweißen des aufgesetzten Schneidelements auf eine Stirnfläche des Grundkörpers lassen sich bis zu 50% des für das Schneidelement erforderlichen Materials einsparen, ohne dass das Bohrwerkzeug qualitative oder funktionelle Einbußen erfährt.

Vorzugsweise sieht die Erfindung vor, das Bohrwerkzeug insbesondere als Gesteinsbohrwerkzeug für das dreh-schlagende Bohren in Beton und/oder Mauerwerk und/oder Gestein auszubilden, wobei das Bohrwerkzeug einen Einspannschaft, eine Wendel und den als Bohrkopf ausgebildeten Arbeitskopf umfasst, wobei die Wendel den Bohrkopf und den Einspannschaft verbindet. Durch eine derartige Ausbildung des Bohrwerkzeugs ist es möglich den erfindungsgemäßen Grundgedanken für Bohrwerkzeuge unterschiedlichster Durchmesser auszuführen.

Die Erfindung sieht vorzugsweise vor, den Oberflächenabschnitt des Grundkörpers, auf welchen das aufgesetzten Schneidelement aufgeschweißt ist, insbesondere als ebenen Oberflächenabschnitt oder insbesondere als konkaven Oberflächenabschnitt oder insbesondere als konvexen Oberflächenabschnitt, welcher insbesondere als Oberflächenabschnitt einer Kegelmantelfläche geformt ist, auszubilden. Ein ebener oder konvexer Oberflächenabschnitt lässt sich fertigungstechnisch besonders einfach herstellen. Durch einen konkaven Oberflächenabschnitt kann die Position, an welcher das aufgesetzte Schneidelement durch mehrere Schweißvorgänge aufgebaut wird, besonders gut vorgegeben werden.

Vorzugsweise ist ein Bohrwerkzeug mit wenigsten zwei Nebenschneidelementen vorgesehen, wobei diese symmetrisch oder asymmetrisch zu einer Längsachse des Bohrwerkzeugs positioniert sind. Durch eine derartige Anordnung ist eine weitgehend gleichmäßige Verteilung der Belastungen der Nebenschneidelemente sicher gestellt.

Vorzugsweise sieht die Erfindung vor, das Nebenschneidelement mit seiner Körperachse zu einer Längsachse des Bohrwerkzeug insbesondere parallel oder insbesondere in einem spitzen Winkel auszurichten wobei das Nebenschneidelement selbst insbesondere als zu der Körperachse rotationssymmetrischer Körper ausgebildet ist. Durch eine derartige Ausrichtung und/oder Formgebung wird eine optimale Mitwirkung des Nebenschneidelements beim Zertrümmern von Material erreicht.

Bezüglich des Hauptschneidelements sieht die Erfindung vorzugsweise vor, dieses entweder in einen Schlitz des Grundkörpers des Arbeitskopfs einzubetten, wobei das Hauptschneidelement insbesondere als Schneidplatte und insbesondere als Hartmetallschneidplatte ausgebildet. Durch eine derartige Ausführungsform kann für die Herstellung der Hauptschneide des Bohrwerkzeugs auf herkömmliche, bereits entwickelte und bewährte Hauptschneidplatten zurückgegriffen werden.

Alternativ zu eine rotationssymmetrischen Ausbildung des Nebenschneidelements sieht die Erfindung vorzugsweise vor, dass Nebenschneidelement in Draufsicht auf den Arbeitskopf insbesondere mit einer rechteckigen oder bumerangförmigen oder S-förmigen Grundfläche auszubilden. Durch eine derartige Formgebung lässt sich insbesondere der Bereich, in welchem das Nebenschneidelement in Vorschubrichtung wirkt, vergrößern, ohne dass das Volumen des Nebenschneidelements zu unverhältnismäßig ansteigt.

Bezüglich der Auslegung des Schneidelements sieht die Erfindung vorzugsweise vor, das aufgesetzte Schneidelement mit einer Härte auszubilden, welche größer oder gleich HRC 60 ist und insbesondere in einem Bereich von HRC 60 bis HRC 80 liegt, wobei es vorgesehen ist, das aufgesetzte Schneidelement insbesondere aus Edelmetall herzustellen oder insbesondere aus Hartstoff herzustellen oder insbesondere mit Hartmetallbestandteilen zu versehen und wobei insbesondere der für das Hauptschneidelement verwendete zweite Werkstoff härter ist als der für das Nebenschneidelement verwendete dritte Werkstoff.

Vorzugsweise sieht die Erfindung vor, dass das aufgesetzte Schneidelement aus mehreren bzw. n Schichten aufzubauen, wobei wenigsten n-1 Schichten jeweils mehrere Schweißpunkte umfassen, wobei die Zahl der Schweißpunkte pro Schicht von einer untersten, mit dem Grundkörper des Arbeitskopfes in Verbindung stehenden Schicht zu einer obersten Schicht insbesondere gleich bleibt oder insbesondere stetig abnimmt oder insbesondere in wenigstens einem Abschnitt abnimmt und in wenigstens einem anderen Abschnitt gleich bleibt. Hierdurch kann das als aufgesetztes Schneidelement ausgeführte Nebenschneidelement bzw. Hauptschneidelement in einer frei wählbaren, auf die Anwendungserfordernisse angepassten Geometrie aufgebaut werden. Dies erfolgt durch eine entsprechende Wahl der Konturen der übereinander liegenden Schichten und eine entsprechende Wahl der Zahl und/oder der Größe der Schweißpunkte in der jeweiligen Schicht. Durch die Vielzahl der Schweißpunkte, welche bei einem aufgesetzten Schneidelement eine direkte Verbindung mit dem Grundkörper des Arbeitskopfes aufweisen, ist selbst dann, wenn ein einzelner Schweißtropfen nicht zu 100% optimal mit dem Grundkörper verbunden ist, eine sichere und zuverlässige Verbindung des aufgesetzten Schneidelements mit dem Grundkörper gewährleistet.

Das erfindungsgemäße Verfahren sieht vor, das wenigstens eine Nebenschneidelement als aufgesetztes Schneidelement auszubilden, das durch mehrere Schweißvorgänge aus einem Schweißdraht auf einem Oberflächenabschnitt des Grundkörpers des Arbeitskopfes aufgeschweißt wird, wobei die zeitlich nacheinander erfolgenden Schweißvorgänge insbesondere unter Verwendung eines Cold-Metal-Transfer-Verfahrens erfolgen. Hierdurch ist es möglich aufgesetzte Schneidelemente mit gegenüber herkömmlichen, eingebetteten Schneidelementen geringem Materialbedarf aus einer Vielzahl unterschiedlicher Werkstoff mit einer optimalen Anbindung an den Grundkörper herzustellen. Dadurch, dass derartige aufgesetzte Schneidkörper an jedem Bohrwerkzeug individuell hergestellt werden, ist es fertigungstechnisch einfach möglich, durch einen Programmwechsel der Fertigungseinrichtung, den jeweils zu fertigenden, aufgesetzten Schneidkörper in Form und Dimension auf unterschiedliche Durchmesser des jeweils herzustellenden Bohrwerkzeugs oder unterschiedliche Einsatzzwecke anzupassen. Insbesondere wird auch die Logistik stark vereinfacht, da die aufgesetzten Schneidelemente vor Ort erzeugt werden, so dass nur das Rohmaterial in Form von Schweißdraht vorgehalten werden muss.

Im Sinne der Erfindung wird unter einem Nebenschneidelement ein Schneidelement verstanden, welches gegenüber einer insbesondere giebelförmig verlaufenden Schneidkante des Hauptschneidelements entgegen einer Vorschubrichtung des Bohrwerkzeugs zurückversetzt ist, aber während des Bohrvorgangs in Richtung einer Längsachse des Bohrwerkzeugs auf einen Grund des Bohrlochs insbesondere schlagend einwirkt und hierbei insbesondere Material zertrümmert. Zusätzlich oder alternativ arbeitet das Nebenschneidelement als Abstützelement, mit welchem sich das Bohrwerkzeug auf dem Grund des Bohrlochs abstützt.

In Sinne der Erfindung wird unter einem Cold-Metal-Transfer-Verfahren ein Schweißverfahren verstanden, welches entsprechend oder ähnlich zu dem von der Firma Fronius International GmbH entwickelten z.B. in der WO 2006/125234 A1 beschriebenen CMT-Verfahren oder entsprechend dem in der EP 1 384 546 C2 der Firma Illinois Tool Works Inc. beschriebenen Verfahren funktioniert.

Im Sinne der Erfindung sind unter einem Abschnitt wenigstens zwei in Vorschubrichtung x direkt aufeinander folgende Schichten aus Schweißpunkten zu verstehen.

Weitere Einzelheiten der Erfindung werden in der Zeichnung anhand von schematisch dargestellten Ausführungsbeispielen beschrieben.

Hierbei zeigt:
- Fig. 1:: eine perspektivische Ansicht eines erfindungsgemäßen Bohrwerkzeugs;
- Fig. 2:: eine Seitenansicht auf das in der Figur 1 gezeigte Bohrwerkzeug aus einer in der Figur 1 gezeigten Pfeilrichtung II;
- Figur 3:: eine Draufsicht auf das in der Figur 2 gezeigte Bohrwerkzeug aus einer in der Figur 2 gezeigten Pfeilrichtung III;
- Figur 4a - 4h:: Draufsichten und Seitenansichten des in den Figuren 1 bis 3 gezeigten Bohrwerkzeugs mit zunehmend vollständiger aufgebauten Nebenschneidelementen;
- Figur 5:: ein erste Ausführungsvariante eines erfindungsgemäßen Bohrwerkzeugs in Draufsicht und
- Figur 6:: eine zweite Ausführungsvariante eines erfindungsgemäßen Bohrwerkzeugs in Draufsicht.

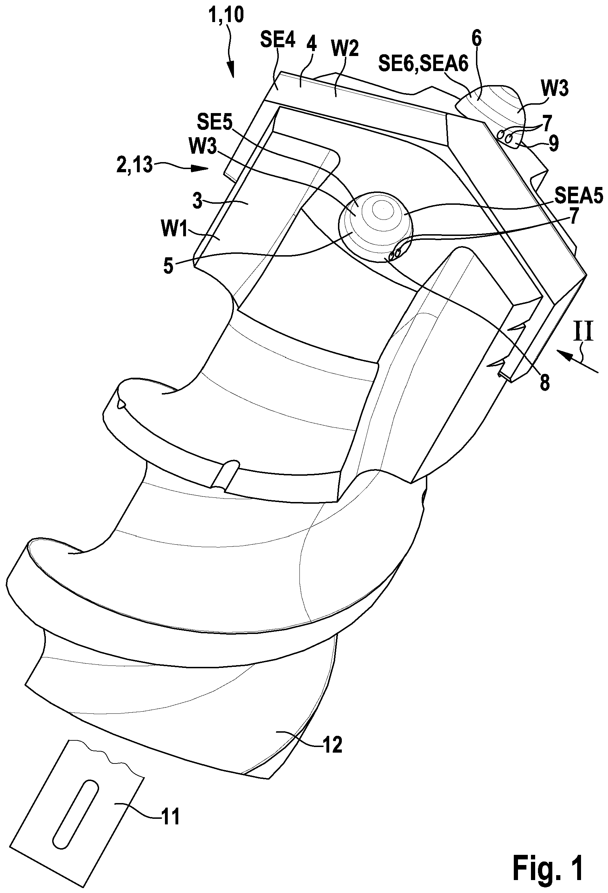

In der Figur 1 ist eine perspektivische Ansicht eines erfindungsgemäßen Bohrwerkzeugs 1 gezeigt, welches als maschinengetriebenes Bohrwerkzeug 1 zur Einwirkung auf ein zu bearbeitendes, nicht dargestelltes Material ausgebildet ist. Das Bohrwerkzeug 1 umfasst einen Arbeitskopf 2, welcher einen Grundkörper 3 aus einem ersten Werkstoff W1, ein als Schneidelement SE4 ausgebildetes Hauptschneidelement 4 aus einem zweiten Werkstoff W2 und zwei als Schneidelemente SE5, SE6 ausgebildete Nebenschneidelemente 5, 6 aus einem dritten Werkstoff W3 umfasst, wobei der zweite und der dritte Werkstoff W2, W3 jeweils härter ist als der erste Werkstoff W1. Beide Nebenschneidelemente 5, 6 sind als aufgesetzte Schneidelemente SEA5 und SEA6 aus einer Vielzahl von Schweißtropfen bzw. Schweißpunkten 7 zusammengesetzt, wobei in der Figur 1 nur ein Teil der Schweißpunkte 7 exemplarisch und schematisch dargestellt ist. Die beiden Nebenschneidelemente 5, 6 sind im Unterschied zu dem Hauptschneidelement 4 als aufgesetzte Schneidelemente SEA5, SEA6 unter Vermeidung eines zur Scherkraftübertragung geeigneten Formschlusses mit dem Grundkörper 3 in Form von einzelnen Schweißpunkten 7 mehrlagig bzw. mehrschichtig auf einen Oberflächenabschnitt 8 bzw. 9 des Grundkörpers 3 des Arbeitskopfes 2 aufgeschweißt. Das Bohrwerkzeug 1 ist als Gesteinsbohrwerkzeug 10 für das dreh-schlagende Bohren in Beton bzw. Mauerwerk bzw. Gestein ausgebildet, wobei das Bohrwerkzeug 1 einen in der Figur 1 nur schematisch angedeuteten Einspannschaft 11, eine Wendel 12 und den als Bohrkopf 13 ausgebildeten Arbeitskopf 2 umfasst. Die Wendel 12 verbindet den Bohrkopf 13 und den Einspannschaft 11.

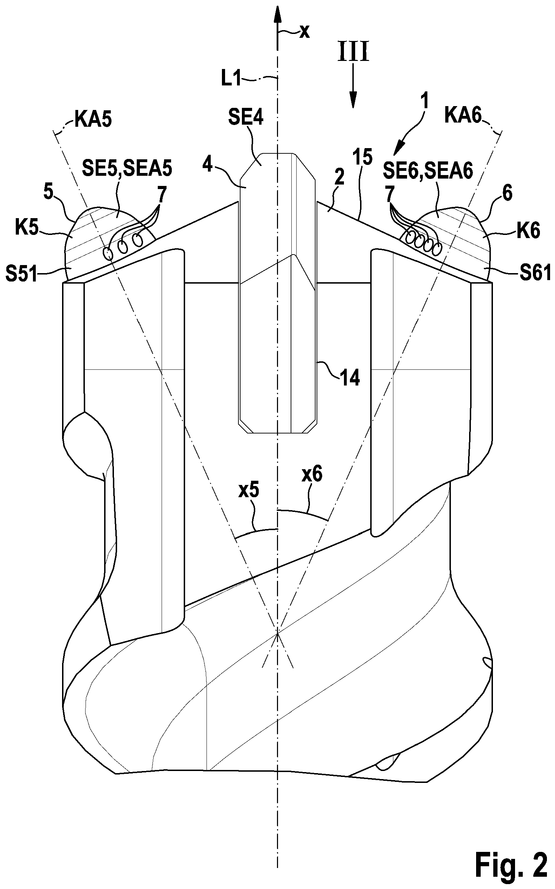

In der Figur 2 ist eine Seitenansicht auf das in der Figur 1 gezeigte Bohrwerkzeug 1 dargestellt, welche dieses aus der in der Figur 1 angegebenen Pfeilrichtung II zeigt. In der Seitenansicht ist erkennbar wie das Hauptschneidelement 4 in bekannter Weise in einen in dem Grundkörper 3 des Arbeitskopfes 2 ausgeführten Schlitz 14 eingebettet ist. Weiterhin ist in der Seitenansicht erkennbar wie die beiden Nebenschneidelemente 5, 6 als aufgesetzte Schneidelemente SEA5 und SEA6 auf eine kegelmantelförmige Oberfläche 15 des Arbeitskopfes 2 aufgesetzt sind. Die Nebenschneidelemente 5, 6 sind jeweils über ihre exemplarisch dargestellten, einzelnen Schweißpunkte 7 einer untersten Schicht S51 bzw. S61 mit dem Arbeitskopf 2 durch eine der Zahl der Schweißpunkte 7 in der untersten Schicht S51 bzw. S61 entsprechende Zahl von Schweißungen verbunden. Das Bohrwerkzeug 1 weist eine Längsachse L1 auf, um welche das Bohrwerkzeug 1 beim dreh-schlagenden Bohren rotiert und entlang welcher das Bohrwerkzeug 1 beim dreh-schlagenden Bohren wiederholt schlagartig in Vorschubrichtung bzw. in Pfeilrichtung x bewegt wird. Die beiden Nebenschneidelemente 5, 6 sind jeweils zu einer Körperachse KA5 bzw. KA6 als rotationssymmetrische Körper K5 bzw. K6 ausgeführt. Die Körperachsen KA5 bzw. KA6 schließen mit der Längsachse L1 des Bohrwerkzeugs jeweils einen spitzen Winkel α5 bzw. α6 ein.

Gemäß einer nicht dargestellten Ausführungsform ist es auch vorgesehen, dass ein oder mehrere Nebenschneidelemente jeweils eine Körperachse aufweisen, welche parallel zu der Längsachse des Bohrwerkzeugs ausgerichtet ist.

Gemäß einer weiteren, nicht dargestellten Ausführungsvariante ist es auch vorgesehen, das Hauptschneidelement wie ein Nebenschneidelement herzustellen und statt dieses nicht in den Grundkörper einzubetten, sondern in mehreren Schichten auf die Kegelmantelfläche des Grundkörpers aufzuschweißen.

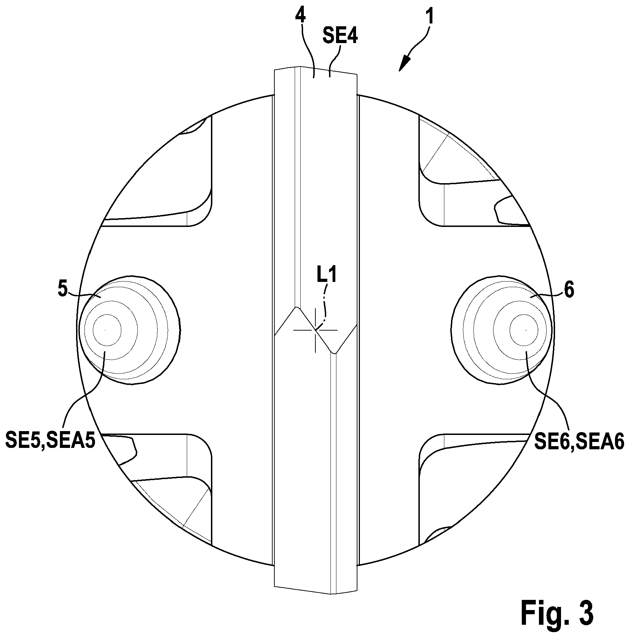

In der in der Figur 3 gezeigten Draufsicht auf das in der Figur 2 gezeigte Bohrwerkzeug 1 ist eine symmetrische Anordnung der beiden Nebenschneidelemente 5 und 6 zu der Längsachse L1 des Bohrwerkzeugs 1 erkennbar. Hierdurch wird ein gleichmäßiger Lauf des Bohrwerkzeugs begünstigt.

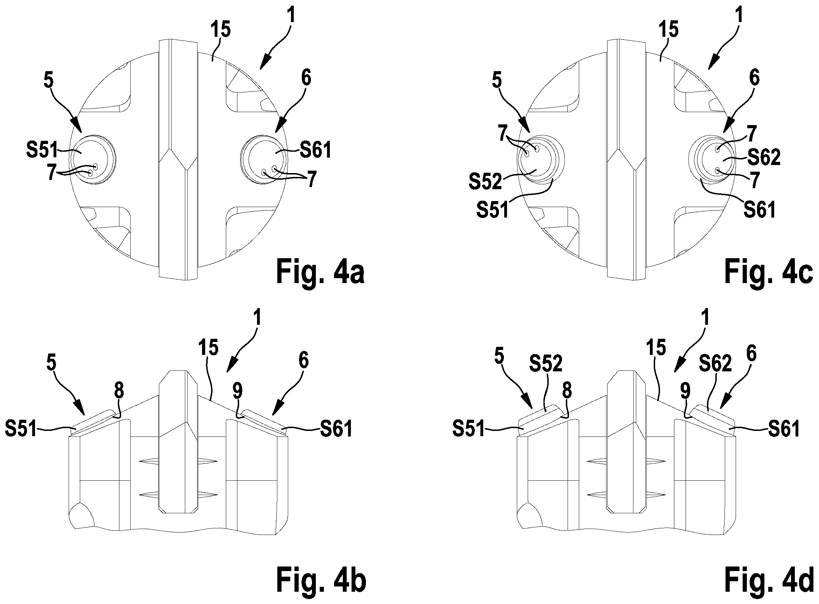

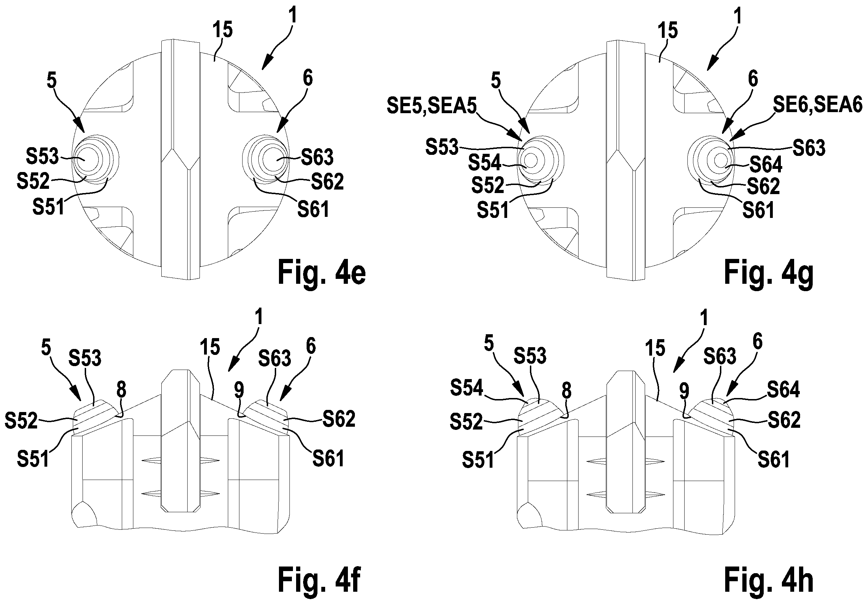

Anhand der Figuren 4a bis 4h ist ein Verfahren zur Herstellung des in den Figuren 1 bis 3 gezeigten Bohrwerkzeugs 1 nachvollziehbar. Hierbei ist in den Figuren 4a, 4c, 4e und 4g schrittweise in Draufsicht und in den Figuren 4b, 4d, 4f und 4h schrittweise in Seitenansicht gezeigt wie die beiden Nebenschneidelemente 5, 6 aus der bereits oben erwähnten untersten Schicht S51 bzw. S61 und jeweils drei weiteren Schichten S52 bis S54 bzw. S62 bis S64 aufgebaut werden. Die Figuren 4a und 4b zeigen das Bohrwerkzeug 1 bei fertig gestellter unterster bzw. erster Schicht S51 bzw. S61. Die Figuren 4c und 4d zeigen das Bohrwerkzeug 1 bei fertig gestellter zweiter Schicht S52 bzw. S62. Die Figuren 4e und 4f zeigen das Bohrwerkzeug 1 bei fertig gestellter dritter Schicht S53 bzw. S63. Die Figuren 4g und 4h zeigen das Bohrwerkzeug 1 schließlich bei fertig gestellter oberster bzw. vierter Schicht S54 bzw. S64. Im dargestellten Ausführungsbeispiel ist die unterste Schweißschicht bzw. Schicht S51 bzw. S61 aus 20 Schweißtropfen bzw. Schweißpunkten 7 gebildet. Die zweite Schweißschicht bzw. Schicht S52 bzw. S62 ist aus 14 Schweißtropfen bzw. Schweißpunkten 7 gebildet. Die dritte Schweißschicht bzw. Schicht S53 bzw. S63 ist aus 8 Schweißtropfen bzw. Schweißpunkten 7 gebildet. Die oberste bzw. vierte Schweißschicht bzw. Schicht S54 bzw. S64 ist aus 4 Schweißtropfen bzw. Schweißpunkten 7 gebildet. Somit ist das Nebenschneidelement 5 bzw. 6 in den Figuren 4g und 4h als Schneidelement SE5, SE6 dargestellt, welches als vollständiges, aufgesetztes Schneidelement SEA5 bzw. SEA6 aus jeweils insgesamt 46 Schweißtropfen bzw. Schweißpunkten 7 zusammengesetzt ist. In den Figuren 4a bis 4h sind die Schweißpunkte 7 jeweils nicht in der vollständigen Zahl, sondern nur exemplarisch eingezeichnet. Grundsätzlich wird das jeweilige Nebenschneidelement 5 bzw. 6 durch mehrere Schweißvorgänge aus einem Schweißdraht auf dem Oberflächenabschnitt 8 bzw. 9 der Kegelmantelfläche 15 des Grundkörpers 3 des Arbeitskopfes 2 aufgebaut, wobei die einzelnen Schweißvorgänge unter Verwendung eines Cold-Metal-Transfer-Verfahrens erfolgen. Abschließend werden im Cold-Metal-Transfer-Verfahren erzeugten Schneidelemente durch Verfestigungsstrahlen nachbehandelt, wobei dieses insbesondere mit Stahlkugeln erfolgt.

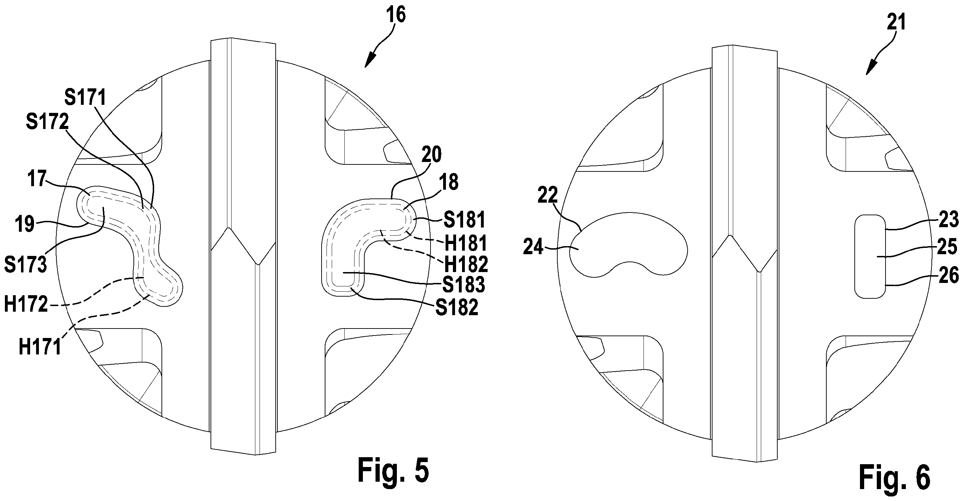

In der Figur 5 ist eine erste Ausführungsvariante eines erfindungsgemäßen Bohrwerkzeugs 16 in Draufsicht gezeigt. Das Bohrwerkzeug 16 ist bis auf Nebenschneidelemente 17, 18 identisch zu dem in den Figuren 1 bis 4h gezeigten Bohrwerkzeug ausgeführt. Das erste Nebenschneidelement 17 weist eine S-förmige Grundfläche 19 auf. Mit gestrichelten Linien sind zwei Höhenlinien H171 und H172 eingezeichnet, welche andeuten, dass das Nebenschneidelement in drei Schichten S171, S172 und S173 aufgebaut ist und sich somit in einer aus der Zeichnungsebene heraus verlaufenden Vorschubrichtung verjüngt. Das zweite Nebenschneidelement 18 ist in seiner Formgebung ebenfalls durch zwei Höhenlinien H181 und H182 konkretisiert und weist eine bumerangförmige Grundfläche 20 auf. Beide Nebenschneidelemente 17, 18 sind als aufgesetzte Schneidelemente ausgebildet.

In der Figur 6 ist eine zweite Ausführungsvariante eines erfindungsgemäßen Bohrwerkzeugs 21 in Draufsicht gezeigt. Das Bohrwerkzeug 21 ist bis auf Nebenschneidelemente 22, 23 identisch zu dem in den Figuren 1 bis 4h gezeigten Bohrwerkzeug ausgeführt. Das erste Nebenschneidelement 22 weist eine bohnenförmig gebogene Grundfläche 24 auf. Das zweite Nebenschneidelement 23 weist eine etwa rechteckige Grundfläche 25 auf. Beide Nebenschneidelemente 22, 23 sind aus je drei Schichten aufgebaut, verlaufen aber wie aus der Grundfläche extrudierte Körper entweder mit Verjüngung oder ohne Verjüngung. Somit bildet das Nebenschneidelement 23 bei einem Verlauf ohne Verjüngung etwa einen Quader 26. Beide Nebenschneidelemente 22, 23 sind als aufgesetzte Schneidelemente ausgebildet.

Mit den in den Figuren 5 und 6 gezeigten Nebenschneidkörper ist es möglich, durch eine angepasste Formgebung der Nebenschneidkörper auf die speziellen Eigenschaften eines mit dem Bohrwerkzeug im dreh-schlagenden Betrieb zu bearbeitenden Materials einzugehen.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche.

## Patentansprüche

1. Bohrwerkzeug (1, 16, 23), insbesondere maschinengetriebenes Bohrwerkzeug (1, 16, 23) zur Einwirkung auf ein zu bearbeitendes Material, umfassend einen Arbeitskopf (2), welcher einen Grundkörper (3) aus einem ersten Werkstoff (W1), ein als Hauptschneidelement (4) ausgebildetes Schneidelement (SE4) aus einem zweiten Werkstoff (W2) und wenigstens ein als Nebenschneidelement (5, 6; 17, 18, 22, 23) ausgebildetes Schneidelement (SE5, SE6) aus einem dritten Werkstoff (W3) umfasst, wobei der zweite und der dritte Werkstoff (W2, W3) jeweils härter ist als der erste Werkstoff (W1), **dadurch gekennzeichnet, dass** das wenigstens eine Nebenschneidelement (5, 6; 17, 18, 22, 23) als aufgesetztes Schneidelement (SEA5, SEA6) ausgebildet ist und aus wenigstens zwei Schweißpunkten (7) zusammengesetzt ist und dass dieses aufgesetzte Schneidelement (SEA5, SEA6) unter Vermeidung eines zur Scherkraftübertragung geeigneten Formschlusses mit dem Grundkörper (3) in einzelnen Schweißpunkten (7) auf einen Oberflächenabschnitt (8, 9) des Grundkörpers (3) des Arbeitskopfes (2) aufgeschweißt ist.

2. Bohrwerkzeug nach einem der vorhergehenden Ansprüche, **dadurch gekennzeichnet, dass** der zweite Werkstoff (W2) härter ist als der dritte Werkstoff (W3).

3. Bohrwerkzeug nach einem der vorhergehenden Ansprüche, **dadurch gekennzeichnet, dass** das Bohrwerkzeug (1, 16, 23) insbesondere als Gesteinsbohrwerkzeug (10) für das dreh-schlagende Bohren in Beton und/oder Mauerwerk und/oder Gestein ausgebildet ist und dass das Bohrwerkzeug (1, 16, 23) einen Einspannschaft (11), eine Wendel (12) und den als Bohrkopf (13) ausgebildeten Arbeitskopf (2) umfasst, wobei die Wendel (12) den Bohrkopf (13) und den Einspannschaft (11) verbindet.

4. Bohrwerkzeug nach einem der vorhergehenden Ansprüche, **dadurch gekennzeichnet, dass** der Oberflächenabschnitt (8, 9) des Grundkörpers (3), auf welchen das aufgesetzte Schneidelement (SEA5, SEA6) aufgeschweißt ist, als ebener Oberflächenabschnitt oder insbesondere als konkaver Oberflächenabschnitt oder insbesondere als konvexer Oberflächenabschnitt (8, 9), welcher insbesondere als Oberflächenabschnitt (8, 9) einer Kegelmantelfläche (15) geformt ist, ausgebildet ist.

5. Bohrwerkzeug nach einem der vorhergehenden Ansprüche, **dadurch gekennzeichnet, dass** das Bohrwerkzeug (1, 16, 23) wenigstes zwei Nebenschneidelemente (5, 6; 17, 18, 22, 23) aufweist, wobei die Nebenschneidelemente (5, 6; 17, 18, 22, 23) symmetrisch oder asymmetrisch zu einer Längsachse (L1) des Bohrwerkzeugs (1, 16, 23) angeordnet sind.

6. Bohrwerkzeug nach einem der vorhergehenden Ansprüche, **dadurch gekennzeichnet, dass** das Nebenschneidelement (5, 6; 17, 18, 22, 23) eine Körperachse (KA5, KA6) aufweist, welche insbesondere parallel zu einer Längsachse (L1) des Bohrwerkzeugs (1) oder insbesondere in einem spitzen Winkel (α5, α6) zu der Längsachse (L1) des Bohrwerkzeugs (1) steht, und wobei das Nebenschneidelement (5, 6; 17, 18, 22, 23) insbesondere als zu der Körperachse (KA5, KA6) rotationssymmetrischer Körper (K5, K6) ausgebildet ist.

7. Bohrwerkzeug nach einem der vorhergehenden Ansprüche, **dadurch gekennzeichnet, dass** das Hauptschneidelement (4) insbesondere in einen Schlitz (14) des Grundkörpers (3) des Arbeitskopfs (2) eingebettet ist, wobei das Hauptschneidelement (4) insbesondere als Schneidplatte und insbesondere als Hartmetallschneidplatte ausgebildet ist.

8. Bohrwerkzeug nach einem der vorhergehenden Ansprüche, **dadurch gekennzeichnet, dass** das Nebenschneidelement (5, 6; 17, 18, 22, 23) in Draufsicht auf den Arbeitskopf (2) eine rechteckige oder bumerangförmige oder S-förmige Grundfläche (19, 20; 24, 25) aufweist.

9. Bohrwerkzeug nach einem der vorhergehenden Ansprüche, **dadurch gekennzeichnet, dass** das aufgesetzte Schneidelement (SEA5, SEA6) ein Härte aufweist, welche größer gleich HRC 60 ist und insbesondere in einem Bereich von HRC 60 bis HRC 80 liegt, wobei das aufgesetzte Schneidelement (SEA5, SEA6) insbesondere aus Edelmetall besteht oder insbesondere aus Hartstoff besteht oder insbesondere Hartmetallbestandteile aufweist und wobei insbesondere der zweite Werkstoff (W2) härter ist als der dritte Werkstoff (W3).

10. Bohrwerkzeug nach einem der vorhergehenden Ansprüche, **dadurch gekennzeichnet, dass** das aufgesetztes Schneidelement (SEA5, SEA6) durch mehrere bzw. n Schichten (S51 - S54; S61 - S64; S171 - S173; S181 - S183) gebildet ist, wobei wenigstens n-1 Schichten (S51 - S54; S61 - S64; S171 - S173; S181 - S183) jeweils mehrere Schweißpunkte (7) umfassen, wobei die Zahl der Schweißpunkte (7) pro Schicht (S51 - S54; S61 - S64; S171 - S173; S181 - S183) von einer untersten, mit dem Grundkörper des Arbeitskopfes in Verbindung stehenden Schicht (S51; S61; S171; S181) zu einer obersten Schicht (S54; S64; S173; S183) insbesondere gleich bleibt oder insbesondere stetig abnimmt oder insbesondere in wenigstens einem Abschnitt abnimmt und in wenigstens einem anderen Abschnitt gleich bleibt.

11. Verfahren zur Herstellung eines Bohrwerkzeugs (1, 16, 23), insbesondere eines maschinengetriebenen Bohrwerkzeugs (1, 16, 23) zur Einwirkung auf ein zu bearbeitendes Material, wobei das Bohrwerkzeug (1, 16, 23) einen Arbeitskopf (2) umfasst, welcher einen Grundkörper (3) aus einem ersten Werkstoff (W1), ein als Hauptschneidelement (4) ausgebildetes Schneidelement (SE4) aus einem zweiten Werkstoff (W2) und wenigstens ein als Nebenschneidelement (5, 6; 17, 18, 22, 23) ausgebildetes Schneidelement (SE5, SE6) aus einem dritten Werkstoff (W3) umfasst, wobei der zweite und der dritte Werkstoff (W2, W3) jeweils härter ist als der erste Werkstoff (W1), **dadurch gekennzeichnet, dass** das wenigstens eine Nebenschneidelement (5, 6; 17, 18, 22, 23) als aufgesetztes Schneidelement (SEA5, SEA6) durch mehrere Schweißvorgänge aus einem Schweißdraht auf einem Oberflächenabschnitt (8, 9) des Grundkörpers (3) des Arbeitskopfes (2) aufgebaut wird, wobei die Schweißvorgänge insbesondere unter Verwendung eines Cold-Metal-Transfer-Verfahrens erfolgen.

12. Bohrwerkzeug nach einem der Ansprüche 1 bis 10 bzw. Verfahren zur Herstellung eines Bohrwerkzeug nach Anspruch 11, **dadurch gekennzeichnet,**
**dass** das bzw. die aufgesetzten Schneidelemente (SEA5, SEA6) durch wenigstens ein Nebenschneidelement (5, 6; 17, 18, 22, 23) und insbesondere durch das Hauptschneidelement (1, 16, 23) gebildet ist bzw. sind.

## Claims

1. Drilling tool (1, 16, 23), in particular a machine-driven drilling tool (1, 16, 23) for acting on a material to be machined, comprising a working head (2) which comprises a basic body (3) composed of a first material (W1), a cutting element (SE4) configured as a main cutting element (4) and composed of a second material (W2), and at least one cutting element (SE5, SE6) configured as a secondary cutting element (5, 6; 17, 18, 22, 23) and composed of a third material (W3), wherein the second and the third material (W2, W3) are each harder than the first material (W1), **characterized in that** the at least one secondary cutting element (5, 6; 17, 18, 22, 23) is configured as an attached cutting element (SE5, SE6) and is assembled from at least two welding points (7), and **in that**, while avoiding a positive-locking connection, which is suitable for shearing force transmission, with the basic body (3), this attached cutting element (SEA5, SEA6) is welded at individual welding points (7) onto a surface portion (8, 9) of the basic body (3) of the working head (2).

2. Drilling tool according to one of the preceding claims, **characterized in that** the second material (W2) is harder than the third material (W3).

3. Drilling tool according to one of the preceding claims, **characterized in that** the drilling tool (1, 16, 23) is configured in particular as a rock drilling tool (10) for rotary-percussive drilling into concrete and/or masonry and/or rock, and **in that** the drilling tool (1, 16, 23) comprises a clamping shank (11), a helix (12) and the working head (2), which is configured as a drilling head (13), wherein the helix (12) connects the drilling head (13) and the clamping shank (11).

4. Drilling tool according to one of the preceding claims, **characterized in that** the surface portion (8, 9) of the basic body (3) onto which the attached cutting element (SEA5, SEA6) is welded is configured as a planar surface portion or in particular as a concave surface portion or in particular as a convex surface portion (8, 9) which is formed in particular as a surface portion (8, 9) of a cone lateral surface (15).

5. Drilling tool according to one of the preceding claims, **characterized in that** the drilling tool (1, 16, 23) has at least two secondary cutting elements (5, 6; 17, 18, 22, 23), wherein the secondary cutting elements (5, 6; 17, 18, 22, 23) are arranged symmetrically or asymmetrically to a longitudinal axis (L1) of the drilling tool (1, 16, 23).

6. Drilling tool according to one of the preceding claims, **characterized in that** the secondary cutting element (5, 6; 17, 18, 22, 23) has a body axis (KA5, KA6) which is in particular parallel to a longitudinal axis (L1) of the drilling tool (1) or in particular at an acute angle (α5, α6) to the longitudinal axis (L1) of the drilling tool (1), and wherein the secondary cutting element (5, 6; 17, 18, 22, 23) is configured in particular as a body (K5, K6) which is rotationally symmetrical to the body axis (KA5, KA6).

7. Drilling tool according to one of the preceding claims, **characterized in that** the main cutting element (4) is embedded in particular in a slot (14) of the basic body (3) of the working head (2), wherein the main cutting element (4) is configured in particular as a cutting tip and in particular as a hard metal cutting tip.

8. Drilling tool according to one of the preceding claims, **characterized in that** the secondary cutting element (5, 6; 17, 18, 22, 23) has, in a plan view of the working head (2), a rectangular or boomerang-shaped or S-shaped base surface (19, 20; 24, 25).

9. Drilling tool according to one of the preceding claims, **characterized in that** the attached cutting element (SEA5, SEA6) has a hardness which is greater than or equal to HRC60 and in particular lies in a range from HRC60 to HRC80, wherein the attached cutting element (SEA5, SEA6) consists in particular of noble metal or consists in particular of hard material or in particular has hard metal components, and wherein in particular the second material (W2) is harder than the third material (W3).

10. Drilling tool according to one of the preceding claims, **characterized in that** the attached cutting element (SEA5, SEA6) is formed by a plurality of or n layers (S51 - S54; S61 - S64; S171 - S173; S181 - S183), wherein at least n-1 layers (S51 - S54; S61 - S64; S171 - S173; S181 - S183) each comprise a plurality of welding points (7), wherein the number of welding points (7) per layer (S51 - S54; S61 - S64; S171 - S173; S181 - S183),from a lowermost layer (S51; S61; S171; S181) which is connected to the basic body of the working head, to an upper most layer (S54; S64; S173; S183) in particular remains the same or in particular constantly decreases or in particular decreases in at least one portion and remains the same in at least one other portion.

11. Method for producing a drilling tool (1, 16, 23), in particular a machine-driven drilling tool (1, 16, 23) for acting on a material to be machined, wherein the drilling tool (1, 16, 23) comprises a working head (2) which comprises a basic body (3) composed of a first material (W1), a cutting element (SE4) configured as a main cutting element (4) and composed of a second material (W2), and at least one cutting element (SE5, SE6) configured as a secondary cutting element (5, 6; 17, 18, 22, 23) and composed of a third material (W3), wherein the second and the third material (W2, W3) are each harder than the first material (W1), **characterized in that** the at least one secondary cutting element (5, 6; 17, 18, 22, 23) as attached cutting element (SEA5, SEA6) is built up from a welding wire on a surface portion (8, 9) of the basic body (3) of the working head (2) by means of a plurality of welding operations, wherein the welding operations are effected in particular using a cold metal transfer method.

12. Drilling tool according to one of Claims 1 to 10 or a method for producing a drilling tool according to Claim 11, **characterized in that** the attached cutting element(s) (SEAS, SEA6) is or are formed by at least one secondary cutting element (5, 6; 17, 18, 22, 23) and in particular by the main cutting element (1, 16, 23).

## Revendications

1. Outil de perçage (1, 16, 23), en particulier outil de perçage à moteur (1, 16, 23) destiné à agir sur un matériau à usiner, comprenant une tête de travail (2) qui comprend un corps de base (3) d'un premier matériau (W1), un élément de coupe (SE4) d'un deuxième matériau (W2) réalisé comme un élément de coupe principal (4), et au moins un élément de coupe (SE5, SE6) d'un troisième matériau (W3) réalisé comme un élément de coupe secondaire (5, 6 ; 17, 18, 22, 23), le deuxième matériau et le troisième matériau (W2, W3) étant respectivement plus durs que le premier matériau (W1), **caractérisé en ce que** ledit au moins un élément de coupe secondaire (5, 6 ; 17, 18, 22, 23) est réalisé comme un élément de coupe rapporté (SEA5, SEA6) et est composé d'au moins deux points de soudure (7), et **en ce que** cet élément de coupe rapporté (SEA5, SEA6) est soudé à une partie de surface (8, 9) du corps de base (3) de la tête de travail (2) en des points de soudure (7) individuels en évitant une liaison par complémentarité de forme avec le corps de base (3) apte à transmettre la gravité.

2. Outil de perçage selon l'une quelconque des revendications précédentes, **caractérisé en ce que** le deuxième matériau (W2) est plus dur que le troisième matériau (W3).

3. Outil de perçage selon l'une quelconque des revendications précédentes, **caractérisé en ce que** l'outil de perçage (1, 16, 23) est réalisé en particulier comme un outil de perçage pour roche (10) destiné à la roto-percussion dans le béton et/ou la brique et/ou la roche, et **en ce que** l'outil de perçage (1, 16, 23) comprend une tige de serrage (11), un foret hélicoïdal (12) et la tête de travail (2) réalisée comme une tête de perçage (13), le foret hélicoïdal (12) reliant la tête de perçage (13) et la tige de serrage (11).

4. Outil de perçage selon l'une quelconque des revendications précédentes, **caractérisé en ce que** la partie de surface (8, 9) du corps de base (3), sur laquelle est soudé l'élément de coupe rapporté (SEA5, SEA6), est réalisée comme une partie de surface plane ou en particulier comme une partie de surface concave ou en particulier comme une partie de surface convexe (8, 9) qui est en particulier formée comme une partie de surface (8, 9) d'une aire latérale de cône (15).

5. Outil de perçage selon l'une quelconque des revendications précédentes, **caractérisé en ce que** l'outil de perçage (1, 16, 23) présente au moins deux éléments de coupe secondaires (5, 6 ; 17, 18, 22, 23), les éléments de coupe secondaires (5, 6 ; 17, 18, 22, 23) étant disposés de manière symétrique ou asymétrique par rapport à un axe longitudinal (L1) de l'outil de perçage (1, 16, 23).

6. Outil de perçage selon l'une quelconque des revendications précédentes, **caractérisé en ce que** l'élément de coupe secondaire (5, 6 ; 17, 18, 22, 23) présente un axe de corps (KA5, KA6) qui est en particulier parallèle à un axe longitudinal (L1) de l'outil de perçage (1) ou se trouve en particulier selon un angle aigu (α5, α6) par rapport à l'axe longitudinal (L1) de l'outil de perçage (1), et l'élément de coupe secondaire (5, 6 ; 17, 18, 22, 23) étant réalisé en particulier comme un corps (K5, K6) à symétrie de rotation par rapport à l'axe de corps (KA5, KA6) .

7. Outil de perçage selon l'une quelconque des revendications précédentes, **caractérisé en ce que** l'élément de coupe principal (4) est en particulier incorporé dans une fente (14) du corps de base (3) de la tête de travail (2), l'élément de coupe principal (4) étant réalisé en particulier comme une lame coupante et en particulier comme une lame coupante en métal dur.

8. Outil de perçage selon l'une quelconque des revendications précédentes, **caractérisé en ce que** l'élément de coupe secondaire (5, 6 ; 17, 18, 22, 23) présente en vue de dessus de la tête de travail (2) une surface de base (19, 20 ; 24, 25) rectangulaire ou en forme de boomerang ou en forme de S.

9. Outil de perçage selon l'une quelconque des revendications précédentes, **caractérisé en ce que** l'élément de coupe rapporté (SEA5, SEA6) présente une dureté qui est supérieure ou égale à HRC 60 et est située en particulier dans une plage de HRC 60 à HRC 80, dans lequel l'élément de coupe rapporté (SEA5, SEA6) est composé en particulier d'un métal noble ou est composé en particulier d'une substance dure ou présente en particulier des composants en métal dur, et en particulier le deuxième matériau (W2) étant plus dur que le troisième matériau (W3).

10. Outil de perçage selon l'une quelconque des revendications précédentes, **caractérisé en ce que** l'élément de coupe rapporté (SEA5, SEA6) est formé par plusieurs ou n couches (S51 à S54 ; S61 à S64 ; S171 à S173 ; S181 à S183), dans lequel au moins n-1 couches (S51 à S54 ; S61 à S64 ; S171 à S173 ; S181 à S183) comprennent respectivement plusieurs points de soudure (7), dans lequel le nombre des points de soudure (7) par couche (S51 à S54 ; S61 à S64 ; S171 à S173 ; S181 à S183) d'une couche inférieure (S51 ; S61 ; S171 ; S181) en communication avec le corps de base de la tête de travail à une couche supérieure (S54 ; S64 ; S173 ; S183) reste en particulier identique ou diminue en particulier de manière constante ou diminue en particulier dans au moins une partie et reste identique dans au moins une autre partie.

11. Procédé de fabrication d'un outil de perçage (1, 16, 23), en particulier d'un outil de perçage à moteur (1, 16, 23) destiné à agir sur un matériau à usiner, dans lequel l'outil de perçage (1, 16, 23) comprend une tête de travail (2) qui comprend un corps de base (3) d'un premier matériau (W1), un élément de coupe (SE4) d'un deuxième matériau (W2) réalisé comme un élément de coupe principal (4), et au moins un élément de coupe (SE5, SE6) d'un troisième matériau (W3) réalisé comme un élément de coupe secondaire (5, 6 ; 17, 18, 22, 23), le deuxième matériau et le troisième matériau (W2, W3) étant respectivement plus durs que le premier matériau (W1), **caractérisé en ce que** ledit au moins un élément de coupe secondaire (5, 6 ; 17, 18, 22, 23) est réalisé comme un élément de coupe rapporté (SEA5, SEA6) par plusieurs opérations de soudage à partir d'un fil de soudage sur une partie de surface (8, 9) du corps de base (3) de la tête de travail (2), les opérations de soudage étant effectuées en particulier en utilisant un procédé de transfert de métal froid.

12. Outil de perçage selon l'une quelconque des revendications 1 à 10 ou procédé de fabrication d'un outil de perçage selon la revendication 11, **caractérisé en ce que** l'élément ou les éléments de coupe rapporté(s) (SEA5, SEA6) est/sont formé(s) par au moins un élément de coupe secondaire (5, 6 ; 17, 18, 22, 23) et en particulier par l'élément de coupe principal (1, 16, 23).
